# EUROPEAN PATENT SPECIFICATION

(11) **EP 3 030 512 B1**
(45) Date of publication and mention of the grant of the patent: **20.06.2018**
(21) Application number: 14780571.7
(22) Date of filing: 01.08.2014
(51) Int. Cl.: B66F 7/08, G01L 5/28, G01M 17/00

(54) **A SYSTEM FOR MEASURING THE BRAKING FORCE OF A VEHICLE**
SYSTEM ZUR MESSUNG DER BREMSKRAFT EINES FAHRZEUGS
SYSTÈME DE MESURE DE LA FORCE DE FREINAGE D'UN VÉHICULE

(30) Priority: 05.08.2013 IT PI20130072
(43) Date of publication of application: 15.06.2016
(73) Proprietor: Snap NT S.r.l., 95014 Giarre (CT) (IT)
(72) Inventor: BENVENUTI, Alfio, I-95014 Giarre (CT) (IT)
(74) Representative: Celestino, Marco
(86) International application number: PCT/IB2014/063626
(87) International publication number: WO 2015/019262

(56) References cited:
- WO-A-91/19176
- DE-U1- 20 304 331
- US-B2- 7 392 693

## Description

The present invention relates to the field of plants used for checking the braking force of vehicles and, in particular it relates to a system for measuring the braking force comprising a platform brake test bench mounted on a vehicle lift.

### Description of the prior art

Document DE 203 04 331 U1 discloses a vehicle lift to carry out maintenance on the vehicle; the vehicle lift disclosed therein can be provided with a brake test bench.

Document US 7 392 693 B2 shows a device for measuring braking forces arrangeable within a lifting platform.

As well known, a test bench is an apparatus for measuring, the braking force, the braking efficiency, and other parameters of vehicles of different kind. The test benches are now common in the garages and in the overhaul centres for carrying out the tests necessary for the compulsory periodic overhaul of the vehicles circulating on road.

Among these brake test benches for vehicles are known of "plates", or platform type on which the vehicle to be tested moves at a speed of about 10 km/hr and then the braking plant is operated. The braking force is measured contemporaneously to the mass i.e. to the weight of each wheel, and preferably to other parameters of the vehicle, by means of detection devices, for example one, or more load cells, or brake sensors, which are arranged below the test platform. The data are, then, processed in order to determine the main parameters and to construct the curves of interest such as the curve of load and of braking force versus time.

Usually, in order to optimize the available space inside the garage, the plate, or platform, brake test benches are installed on vehicle lifts , for example scissors-type vehicle lifts provided with one, or more hydraulic pistons for arranging the vehicle lift between a raised position and a lowered position. More in detail, the vehicle lift is usually installed in a hole dug in the floor of the garage, in such a way that when it is arranged in the lowered position it is placed substantially at a same level of the floor of the room in which it is installed. Therefore, in this operating configuration it is possible to use the vehicle lift as platform brake test bench.

To this purpose, the support plane of the vehicle lift is provided with brake sensors and/or load cells.

However, this type of brake test benches have some drawbacks. In particular, during the use of the vehicle lift in the mode of lifting owing to the weight of the vehicle the support plane on which it is arranged is subjected to loads that tend to bend it. Therefore, the devices for measuring installed on the vehicle lift in this operation mode record the loads and the stresses to which they are subjected. Therefore, when the devices for measuring are used for measuring the braking forces of the vehicle and other parameters, i.e. normally the vertical forces and/or the horizontal forces acting on the support plane during a test as brake test bench, the devices for measuring are not arranged at the zero of the measuring scale , but at a different value, and therefore the measurement of the forces is distorted. This jeopardizes unavoidably the result of the measurement of the parameters related to the braking efficiency of the vehicle to be tested, in particular of the braking forces with the subsequent danger to put in danger the safety of the people that travel on board of the vehicle if the operator does not notice the measurement error .

In other cases, instead, the operator notices the measurement error and he is therefore obliged to recalibrate the measurement apparatus and to do the test again. In the prior art apparatuses, therefore, owing to the iteration of the above disclosed drawback, it is necessary to periodically calibrate the measuring devices with high loos of time and of costs for the brake test bench keeper.

### Summary of the invention

It is then a feature of the present invention to provide a system for measuring the braking force and the braking efficiency of a vehicle, as well as of other parameters correlated to them, which makes it possible to overcome the above described drawbacks of the prior art and, in particular to avoid that the use of the vehicle lift in the vehicle lift mode can affect the efficiency of the devices for measuring the forces acting on the measuring the test bench platform.

This and other objects are achieved by a system, according to the invention, for measuring the braking force of a vehicle, said system comprising:
- a vehicle lift provided with a platform having a support plane on which, in use, said vehicle is arranged, said vehicle lift arranged to move from a lowered configuration, in which said support plane is arranged substantially at a same height of the floor of the room in which it is installed and operates in a brake test bench mode for measuring the braking force of said vehicle moving on said support plane, and a raised configuration in which said support plane is arranged at a predetermined height from the floor of the room in which it is installed, in particular for maintenance on the vehicle;
- a measuring unit associated with said platform, said measuring unit configured to measure the vertical forces and/or the horizontal forces acting on said support plane when said vehicle lift operates in said brake test bench mode, said measuring unit comprising:
- at least a first measuring device arranged on a first side of said platform;
- at least a second measuring device arranged on a second side of said platform opposite to said first side;
whose main feature is to provide also a slide unit configured to cause a mutual sliding of said first and of said second measuring device along a first sliding direction when the vehicle lift moves from the lowered configuration to the raised configuration, and a sliding in the opposite direction, when the vehicle lift moves from the raised configuration to the lowered configuration, in such a way that said first and said second measuring device are adapted to relatively move towards/away from each other avoiding to be subjected to stresses, or loads.

In particular, with respect to the prior art solutions the present invention avoids that, during the use of the vehicle lift in the lifting mode, i.e. with the support plane positioned at a predetermined height from the floor of the room in which it is installed with the vehicle arranged on it, the measuring devices are subjected to stresses, or loads. In fact, during the movement of the vehicle lift from the lowered position to the raised position, the support plane tends to bend. The slide unit reacts to this bending with a mutual sliding of the first and of the second measuring device, in particular moving away the measuring devices one from the other. When, instead, the vehicle lift moves in the lowered configuration, in order to be used in the brake test bench mode, the slide unit is configured to cause a mutual sliding in an opposite direction with respect to the previous one, i.e. approaching the measuring devices one to the other, in order to return the measuring devices in the initial positions. This way, it is avoided that during the use of the vehicle lift in the lift mode the measuring devices can be subjected to stresses, or loads, which would be detected by the measuring devices jeopardizing their efficiency and reliability.

In particular, the slide unit is associated to a guide means that is arranged to guide said mutual sliding of the first and of the second measuring device.

Advantageously, the slide unit comprises:
- a fixed part integral to the platform of the vehicle lift, said first measuring device being mounted on said fixed part; and
- a movable part arranged to slide with respect to the platform, said second measuring device being mounted on said movable part.

Advantageously, at least one between the movable part and the fixed part of the slide unit is plate-shaped.

For example, the guide means can provide:
- at least one slotted hole made in the movable part of the slide unit and oriented along the above described sliding direction;
- at least one reference element arranged to engage with the slotted hole and fixed, in use, in a seat of the platform.

This way, the movable part can slide in a guided and referred way with respect to the platform.

Advantageously, each movable part has at least a first and a second slotted hole oriented along the above described sliding direction. In each slotted hole is arranged to engage a respective reference element connected to said platform.

In particular, the first measuring device can be mounted on the fixed part of the slide unit and the second measuring device can be mounted on the movable part. Therefore, the second measuring device is arranged to move away from said first measuring device due to the bending of the platform during the movement of the vehicle lift from the lowered position to the raised position, in which the vehicle lift operates in the lifting mode.

Advantageously, at least one between the first and the second measuring device comprises at least one first and at least one second measuring element configured to measure the vertical force and/or the horizontal force acting on the support plane during the use of the platform in the brake test bench mode.

In particular, each measuring element , or a part of them, can be a biaxial force sensor configured to measure both the horizontal forces F and the vertical forces P acting on the support plane of the platform during the measuring test of the braking force of the vehicle.

In particular, the platform is constituted of a plurality of measuring plates. The plurality of plates advantageously comprises, at least a first and a second parallel plates that, in use, are respectively arranged at a first side and at a second side of the vehicle lift. More in detail, the first measuring plate is crossed, in use, by the wheels of a first side of the vehicle, and the second measuring plate is crossed, in use, by the wheels of a second side of the vehicle.

In particular, between the, or each, movable part of the slide unit and the platform a friction reduction element is provided arranged to reduce the friction during the mutual sliding of said movable part with respect to said platform.

Advantageously, the friction reduction element is a plate made of a synthetic material, in particular plastic material, for example Teflon, or a plate of a metal material, such as stainless steel. The plate is interposed, in use, between the movable part and the upper face of the platform.

In particular, the friction reduction plate and the movable part of the slide unit have respective slotted holes that, in use, are overlapped. In particular, at the above described slotted holes the movable part and the friction reduction plate, in use, are constrained to the platform of the vehicle lift by means of at least one reference element, for example a bolt, arranged to engage with a seat provided in said platform. This way, the sliding of the movable part of the slide unit is guided in a precise and referred way avoiding that the measuring devices can move from the correct position with respect to the platform.

In an exemplary embodiment, the friction reduction element comprises at least one sphere, or roller, which is positioned between the platform and the movable part of the slide unit.

In a further exemplary embodiment, the friction reduction element can be a slide integral to the platform, or to the movable part, and a sliding block integral, respectively, to the movable part, or to the platform.

Advantageously a plurality of support elements is also provided each of which having a respective support surface on which said platform rests when the vehicle lift is in said lowered configuration. For example, a first and a second support element can be provided arranged at two opposite sides of the platform. In an exemplary embodiment a first couple of support elements is provided, each of which arranged at one of the two opposite sides of the platform, and a second couple of support elements, each of which arranged at one of the other two opposite sides of the platform. Preferably, the support elements are arranged at, or very close to, the force measuring devices.

This way, it is possible to avoid the use of traditional systems used in the lifting devices to limit vertical movements, such as bolts, struts, etc. These, in fact, during a test for testing the efficiency braking of a vehicle introduce errors in the measurements, because they generate local reactions owing to the compression stresses exerted during the test.

In particular, each support element can be constituted of a support frame equipped with a layer of a low friction material, for example Teflon, at the surface on which, in use, the lifting device rests. This way, the only type of movement of the structure that can occur during a test, is a slipping, or a sliding, of the lifting device on the support surface that, however, does not introduce errors in the measure because the sliding is irrelevant in the measurement of the forces measured by the measuring devices. Furthermore, the support surface is, obviously, larger than that of a bolt, or of a strut, devices, as described above, normally used in this type of structures, and therefore the stresses that can be obtained are not local, but distributed.

Advantageously, the frame is of adjustable type, in particular in height, in such a way that it can be fitted to the different operating conditions.

### Brief description of the drawings

The invention will be now illustrated with the following description of an exemplary embodiment thereof, exemplifying but not limitative, with reference to the attached drawings in which:
- Fig. 1 diagrammatically shows an elevational side view of a system for measuring the braking force of a vehicle, according to the invention, in a lowered configuration in which it operates in brake test bench mode;
- Fig. 2 diagrammatically shows an elevational side view of the system for measuring the braking force of a vehicle of Fig. 1 in a raised configuration in which it operates in vehicle lift mode;
- Fig. 3 diagrammatically shows a top plan view in perspective elevation of a first exemplary embodiment of a measuring plate used in the system for measuring of Fig. 1;
- Fig. 4 diagrammatically shows a top plan view in perspective elevation of a possible exemplary embodiment of the measuring plate of Fig. 3;
- Fig. 5 diagrammatically shows a possible exemplary embodiment of a brake test bench that can be used in the system for measuring the braking force, according to the invention, in which a first and a second measuring plate are provided ;

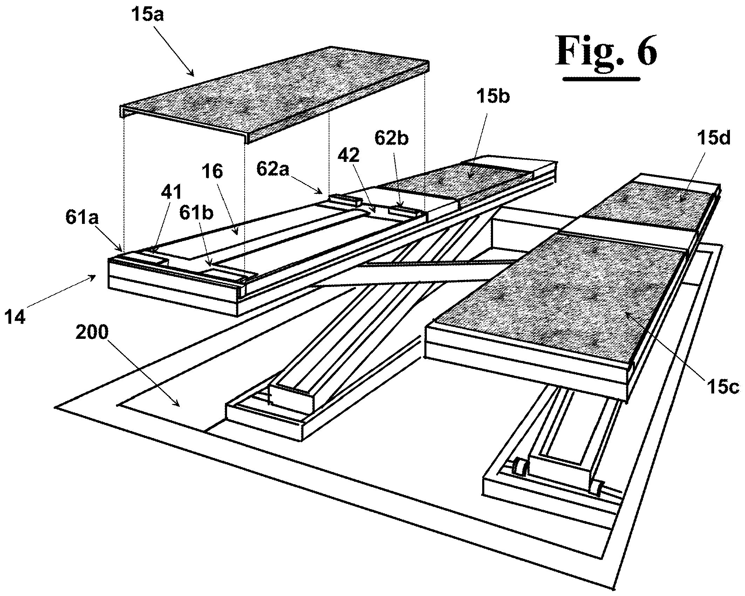

- Fig. 6 shows a perspective view of an exemplary embodiment of the system for measuring the braking force of Fig. 6 in a raised configuration;
- Fig. 7 shows a perspective view of the system for measuring the braking force Fig. 7 in a lowered configuration;

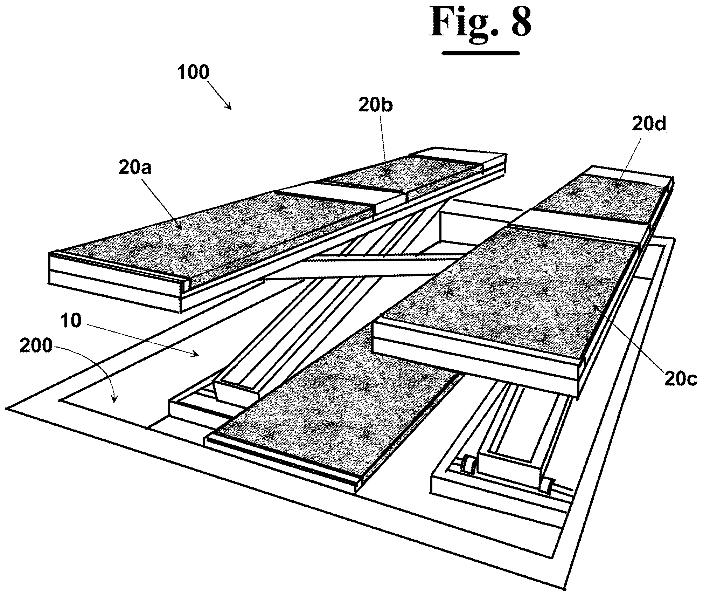

- Fig. 8 shows a perspective view of an exemplary embodiment of the system for measuring the braking force of Fig. 7 in a raised configuration;
- Fig. 9 shows a perspective view of the system for measuring the braking force of Fig. 8 in a lowered configuration;
- Fig. 10 diagrammatically shows, in a partial longitudinal cross section view, a measuring plate that can be associated with the system for measuring the braking force, according to the invention;
- Figs. 11 to 14 show, in top plan perspective views, some possible exemplary embodiments of the slide unit that can be associated with the vehicle lift according to the present invention;
- Figs. 15 to 17 show a cross sectional view of some exemplary embodiments of the friction reduction provided by the present invention;

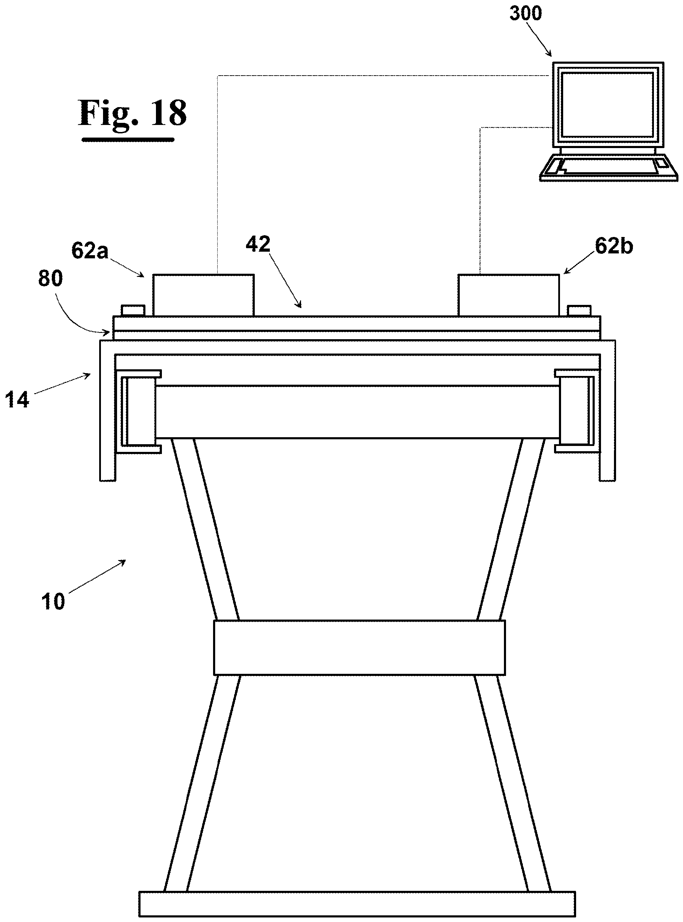

- Fig. 18 shows in a rear view the improved structure of vehicle lift of Fig. 1;
- Figs. 19 to 21 show elevational side views and a perspective view of an exemplary embodiment of the system for measuring the braking force a vehicle of Fig. 1.

### Detailed description of some exemplary embodiments

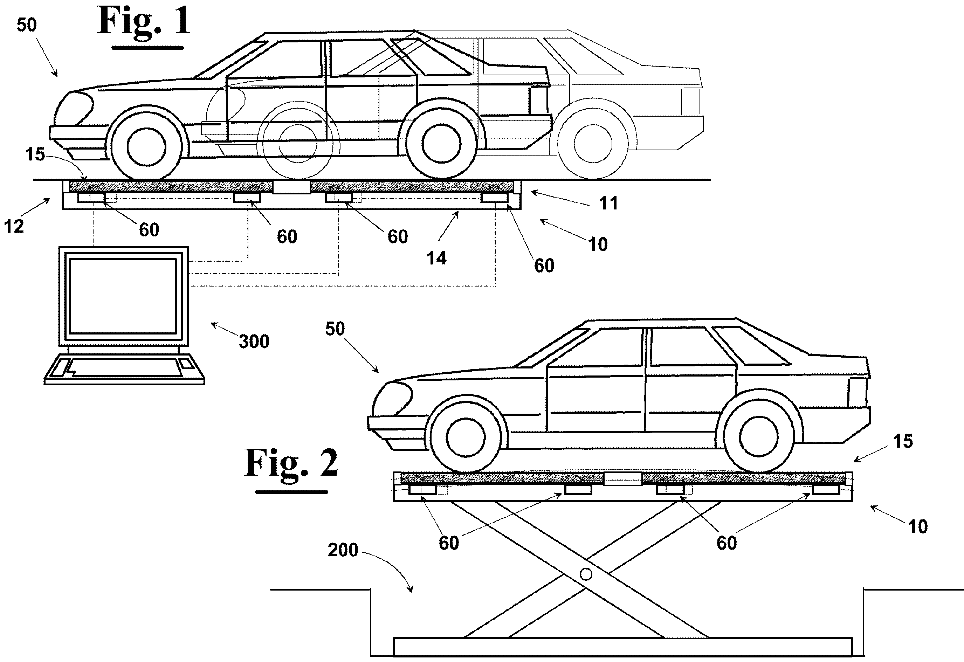

In Fig. 1 is diagrammatically shown a system 100, according to the invention, for measuring the braking force, and other parameters as the braking efficiency, of a vehicle 50. The system 100 comprises a vehicle lift 10 provided with a platform 14 having a support plane 15 on that, in use, a vehicle 50 is arranged.

More in detail, the vehicle lift 10 is arranged to move from a lowered configuration (Fig. 1), in which it operates in brake test bench mode and the braking force of the vehicle 50 is measured, and a raised configuration (Fig. 2) in which the vehicle lift 10 operates in lifting mode, i.e. it is used for lifting the vehicle 50 arranged above the support plane 15 for subjecting it to maintenance such as change of pneumatic, or controls of the mechanical components.

More in detail, when the vehicle lift 10 operates brake test bench mode , the support plane 15 is arranged substantially at a same height of the floor of the room in which the system 100 is installed, for example a garage. This is obtained, usually, installing the vehicle lift 10 in a hole 200 provided in the floor of the room in which it is installed.

The system 100 also comprises a measuring unit 60 associated with the platform 14. The measuring unit 60 is arranged to measure the braking force of the vehicle 50, and in case other parameters such as the braking efficiency, when the vehicle lift 10 operates in the above described brake test bench mode. More in detail, the measuring unit 60 comprises at least one first measuring device 61 arranged on a first side 11 of the platform 14, i.e. the edge at which the vehicle 50 enters on the support plane 15. The first measuring device 61 is adapted to measure the vertical forces P and/or the horizontal forces F acting at the first side 11 of the lifting 10 during a test for measuring the braking force of the vehicle 50.

The measuring unit 60 provides, then, a second measuring device 62 arranged on a second side 12 of the vehicle lift 10, i.e. at the side of the platform 14 opposite to said first side 11.

In particular, a slide unit 40 is provided configured to cause a mutual sliding of the first and of the second measuring device 61 and 62 when the vehicle lift 10 operates in lifting mode. In fact, when the vehicle lift 10 is arranged in the raised configuration of Fig. 2 with a vehicle 50 arranged above the support plane 15, the platform tends to bend for the weight of the vehicle 50 that rests on it. Such a bend generates stress in the structure of the platform 14 that are detected by the devices for measuring 61 and 62. Then when the vehicle lift 10 is operated in the brake test bench mode for measuring the braking force of the vehicle 50, owing to the above described stresses, the measuring devices 61 and 62 are still subjected to loads. Therefore, during the use of the measuring devices 61 and 62 for measuring the vertical forces P, in particular the weight force, and/or the horizontal forces F acting on the support plane 15, the residual loads on the measuring devices 61 and 62 altering the measurements. In fact, the measure does not start from the real zero of the measuring scale of the device, but from a different value owing to the stresses and the loads produced on the measuring devices 61 and 62 during the use of the vehicle lift 10 in the lifting mode.

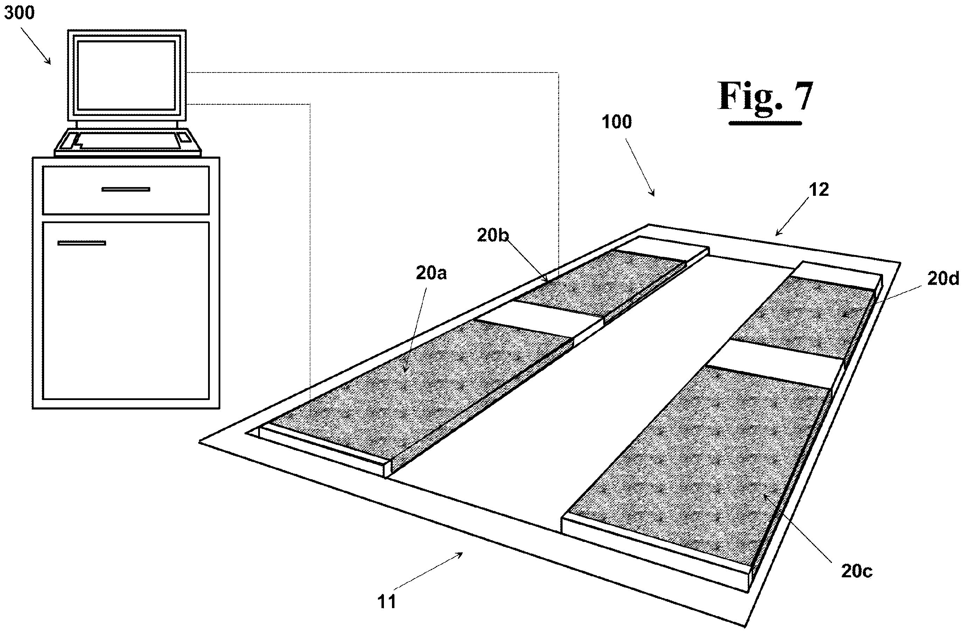

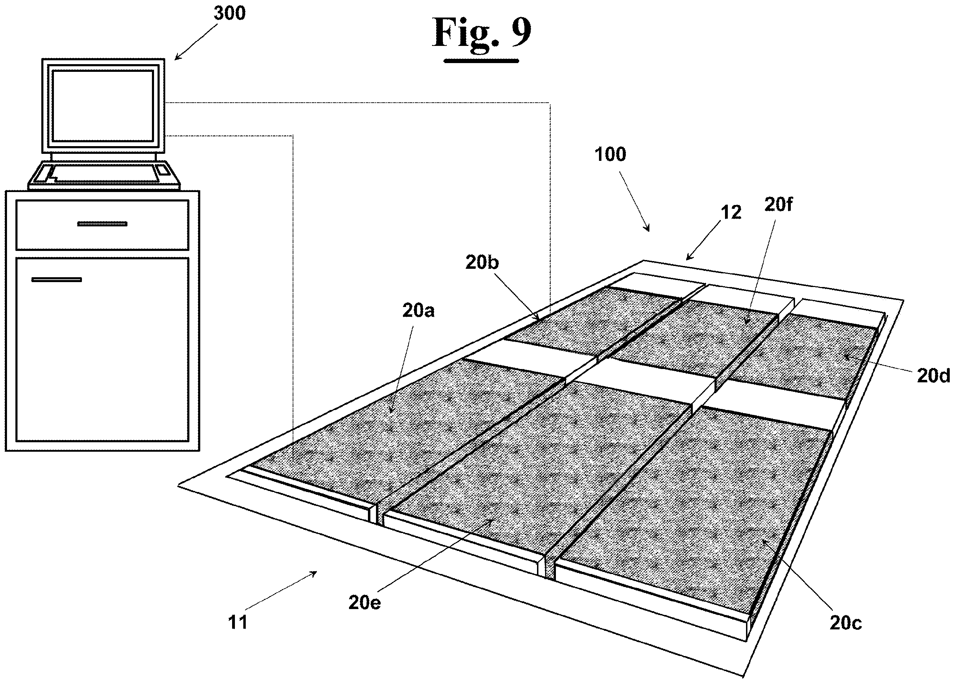

The technical solution provided by the present invention allows, instead, to overcome the above described drawbacks because the system 100 reacts to the above described reasons, in particular to the bending of the platform 14, causing a sliding that brings away the measuring devices 61 and 62 when the platform 14 returns from the lowered position to the raised position, and a sliding in an opposite direction for approaching the measuring devices and bring them in the initial positions, when the vehicle lift 10 brings the platform 14 from the raised position to the lowered position of Fig. 7, or Fig. 9. This way, the first and the second measuring device 61 and 62 are not subjected to loads, or stresses, during the bending of the support plane 15 that occurs owing to the weight of the vehicle overcoming the above described drawbacks of the state of the art.

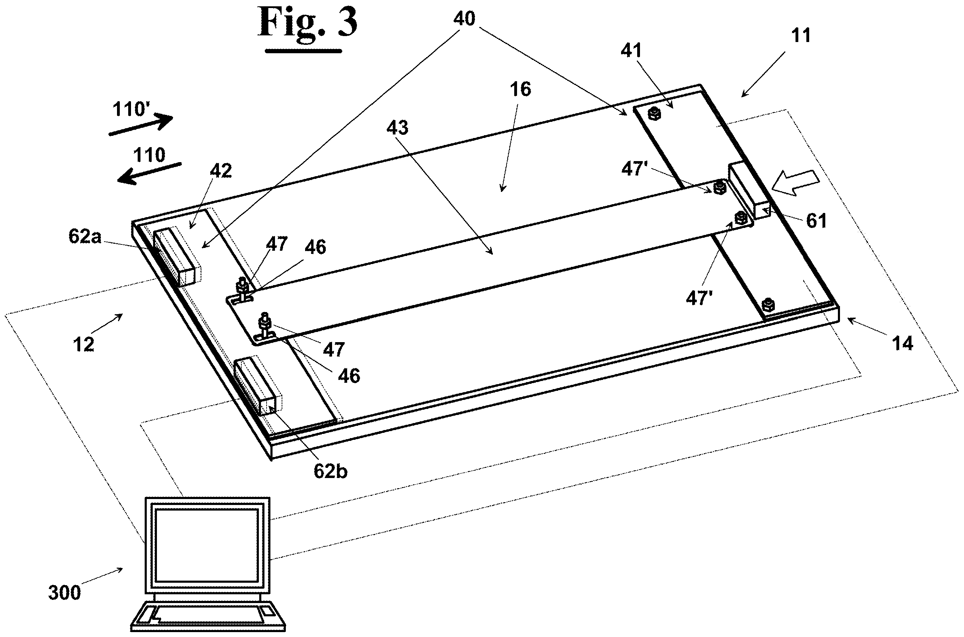

In the exemplary embodiment of Fig. 3, the measurement device 60 provides a measuring device 61 at the side 11 and two measuring devices 61a and 62b at the side 12 of the support plane 15.

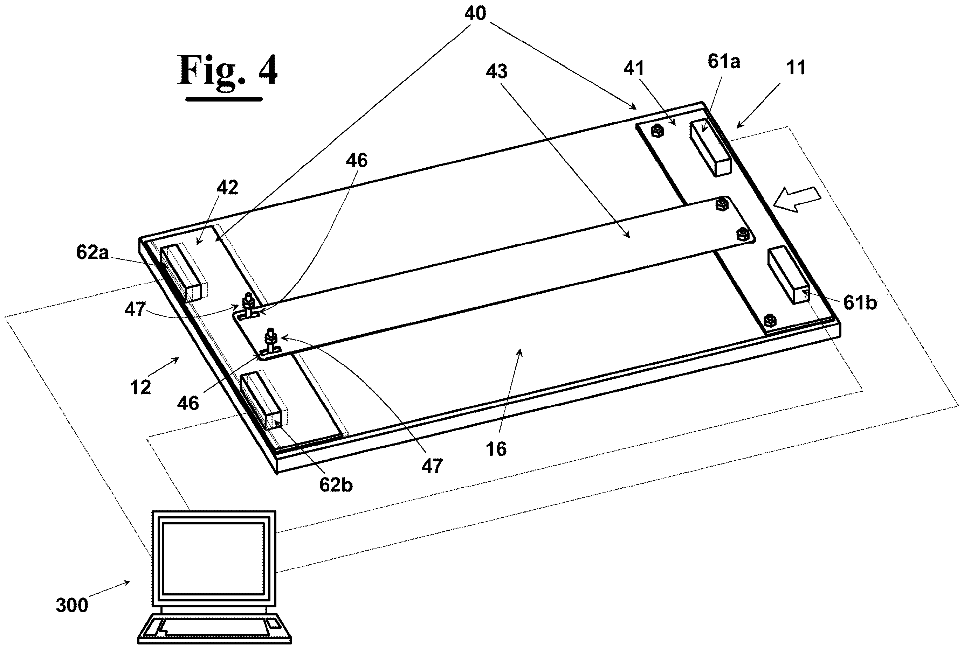

In the exemplary embodiment of Fig. 4, instead, the measurement device 60 provides both two devices for measuring 61a and 61b at the side 11 of the support plane 15 and two measuring devices 62a and 62b at the side 12 of the support plane 15.

Preferably, each measuring device 61a, 61b, 62a, 62b used is a biaxial force sensor and it is therefore able to measure both the vertical forces P, and the horizontal forces F, acting on the support plane 15 during the measuring test of the braking force of the vehicle 50. Commonly, the number of measuring devices , or sensors, used depends on the desired level of precision and on the will to have redundant measurements.

As diagrammatically shown, in Figs. 3 and 4, the slide unit 40 can comprise a fixed part 41 integral to the vehicle lift 10, for example by means of a bolt 47', and on which the first measuring device 61 is installed, and at least one movable part 42 arranged to slide on the support plane 15 with respect to the fixed part 41 and on which the second measuring device 62 is mounted.

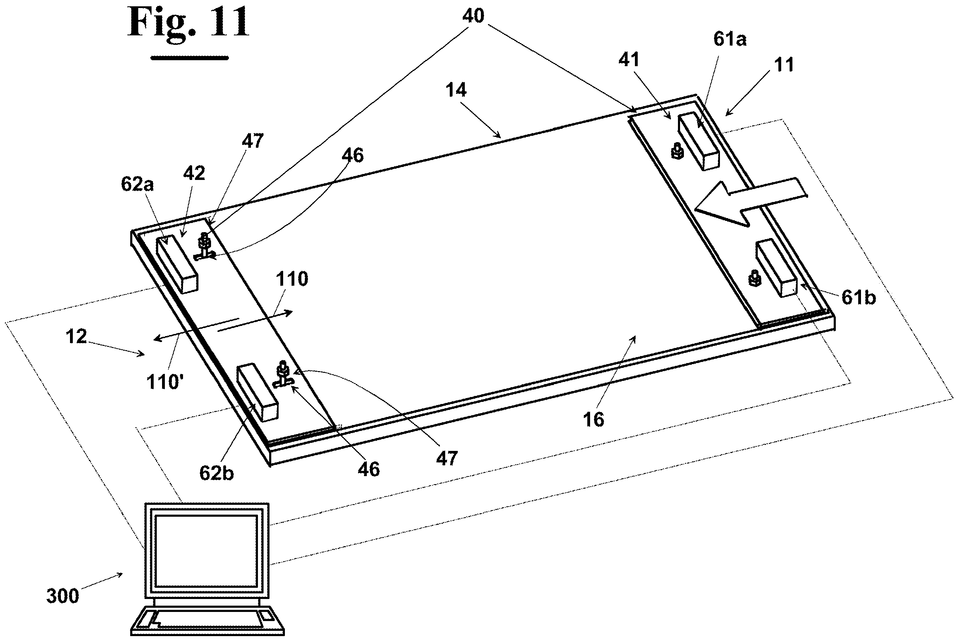

For example, in Fig. 3 a first measuring device 61 is mounted on the fixed part 41 arranged at the side 11 of the platform 14 and a second and a third measuring device 62a and 62b arranged on the movable part 42. In this case, during the movement of the vehicle lift 10 from the lowered position to the raised position in which it operates in lifting mode, the slide unit 40 is configured to cause a sliding of the second and of the third measuring device 62a and 62b along the sliding direction moving them away from the first measuring device 61. When the vehicle lift 10 is lowered for returning the platform 14 substantially at a same height of the floor of the room in which it is installed, instead, the slide unit 40 is configured to cause a sliding of the devices for measuring 61 and 62 in the direction opposite to the previous for bringing them again in the starting position. In Fig. 3, as well as in Fig. 4, a connection portion 43 is provided of the fixed part 41 to the movable part 42 in order to ensure a higher stability to the structure overall. However, as shown in the exemplary embodiments of Figs. 11 to 14 described hereinafter, the connection portion 43 is not essential.

In Figs. 11 to 14 other exemplary embodiments are diagrammatically shown.

In particular, in Fig. 11, the measuring devices that are moved are those arranged at the side 12 of the platform 14, whereas the measuring devices 61a and 61b arranged at the side 11 of the platform 14 are integral to the platform 14 same and then remain fixed.

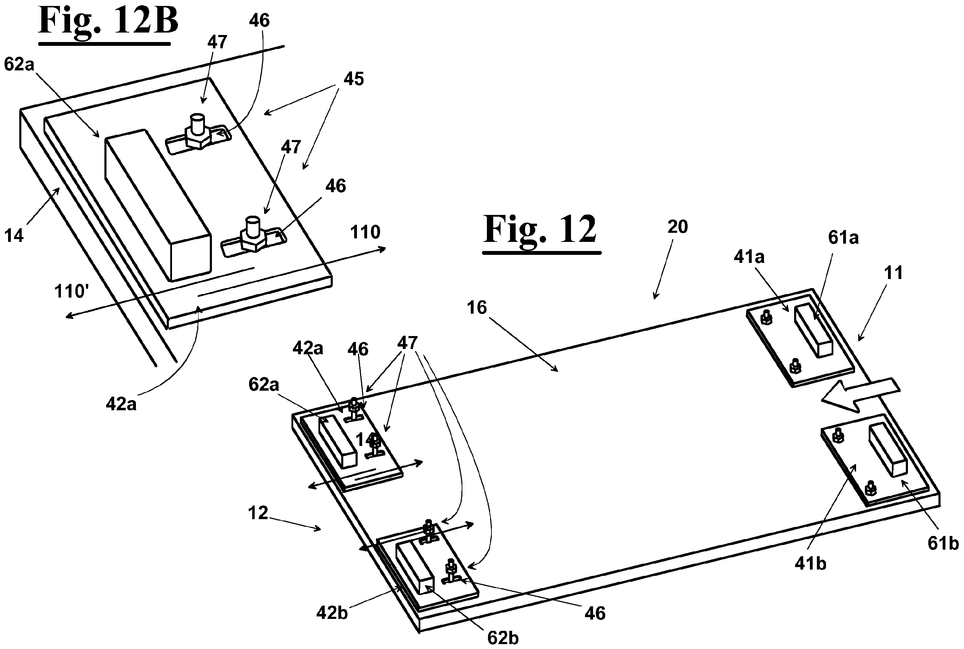

In the exemplary embodiment of Fig. 12B, instead, two movable parts 42a and 42b are provided on each of which a respective measuring device 62a and 62b is mounted.

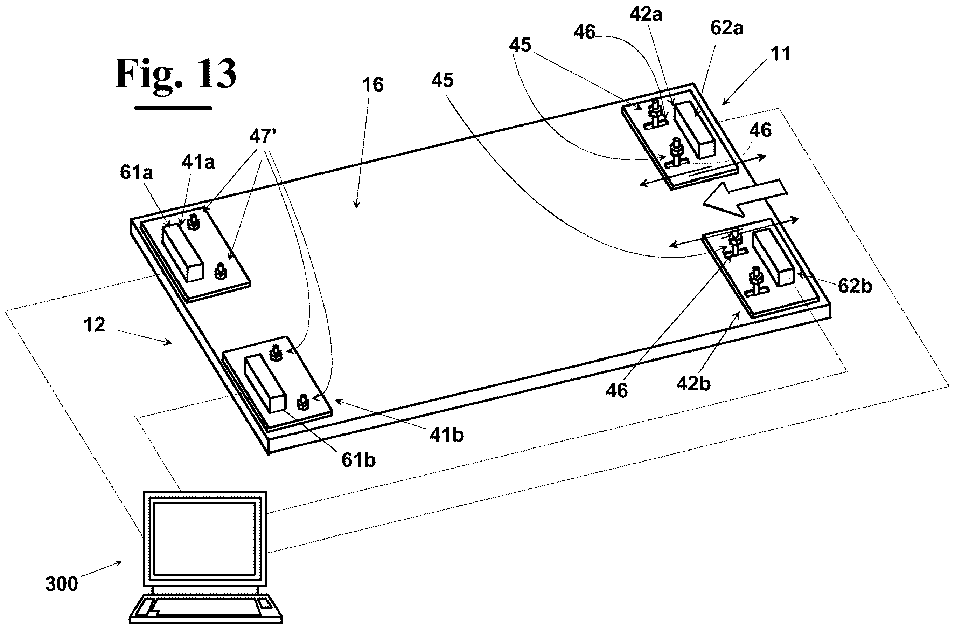

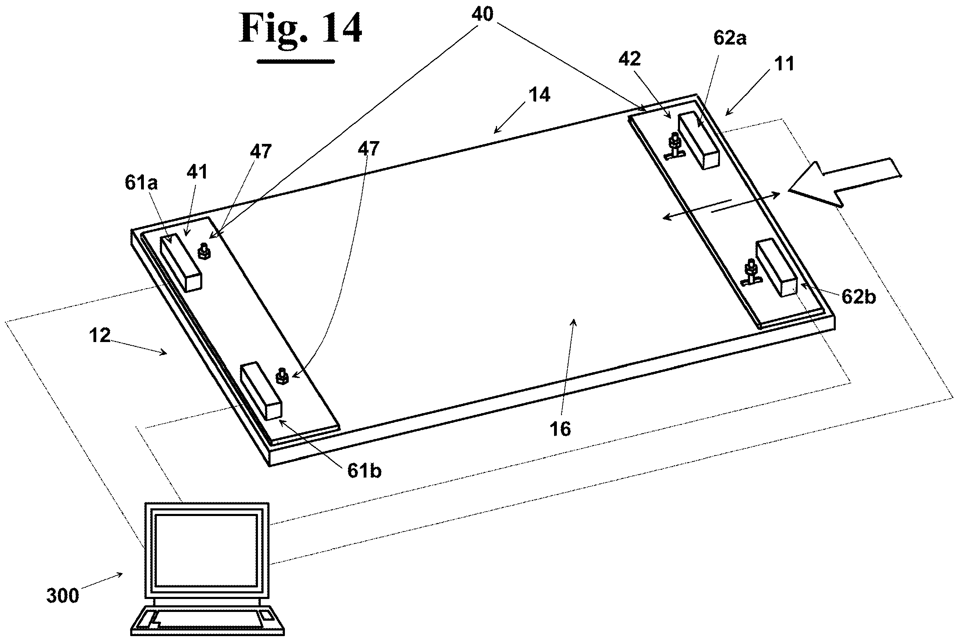

In the figures 13 and 14 are shown further provided exemplary embodiments. In particular, in Fig. 13 the system 100 is completely similar to that described with reference to Fig. 11, but the movable part 42 is arranged at the side 11 of the platform 14, i.e. the side from which the vehicle enters on the support plane 15, and the fixed part at the side 12. Fig. 14 shows an exemplary embodiment that is similar to that of Fig. 12B, but also in this case the movable parts 42a and 42b are arranged at the side 11 of the platform 14 and the fixed parts 41a and 41b at the side 12.

In all the exemplary embodiments of the invention are advantageously provided guide means 45 arranged to guide the sliding of the movable part 42, or of each movable part 42a, 42b, with respect to the fixed part 41. For example, the guide means 45 can provide at least one reference element 47, such as a bolt, connected to the platform 14 at one of its end and mounted in a slotted hole 46 provided at the movable part 42. Therefore, the sliding o the movable part 42 in the sliding direction 110, or in the opposite direction 110', on the platform 14 is guided by the reference elements 47 (Fig. 3). Practically the difference between the fixed part 41 and the movable part 42 is that the first has a circular hole of size substantially identical to the bolt 47' that engages with it, whereas the movable part 42 has a slotted hole that therefore allows the movable part 42 to slide with respect to the bolt 47 through which it is constrained to the platform 14.

In a advantageous exemplary embodiment, each movable part 42a and 42b has two slotted holes 46a and 46b oriented along the sliding direction 110. At each slotted hole 46a, or 46b, a respective reference element 47a, or 47b is mounted.

According to an exemplary embodiment of the invention, the platform 14 consists of a plurality of measuring plates 20, for example 4 measuring plates 20a-20d (Fig. 7) or 6 measuring plates 20a-20f (Fig. 9) each of which define a respective portion of the support plane 15.

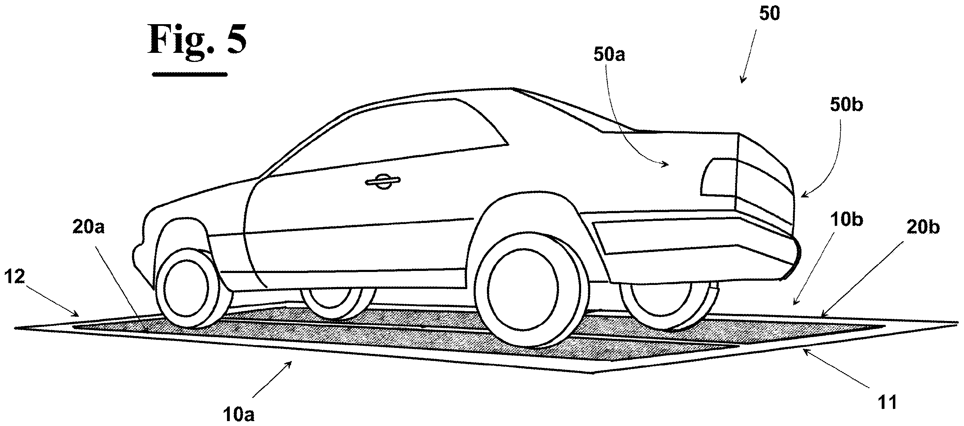

More in detail, as diagrammatically shown in Fig. 5 at least a first and a second parallel plate 20a and 20b can be provided that, in use, are arranged respectively at a first side 10a and at a second side 10b of the vehicle lift 10. More in detail, a first measuring plate 20a is crossed, in use, by the wheels of a first side 50a of the vehicle 50, and a second measuring plate 20b is crossed, in use, by the wheels of a second side 50b of the vehicle 50.

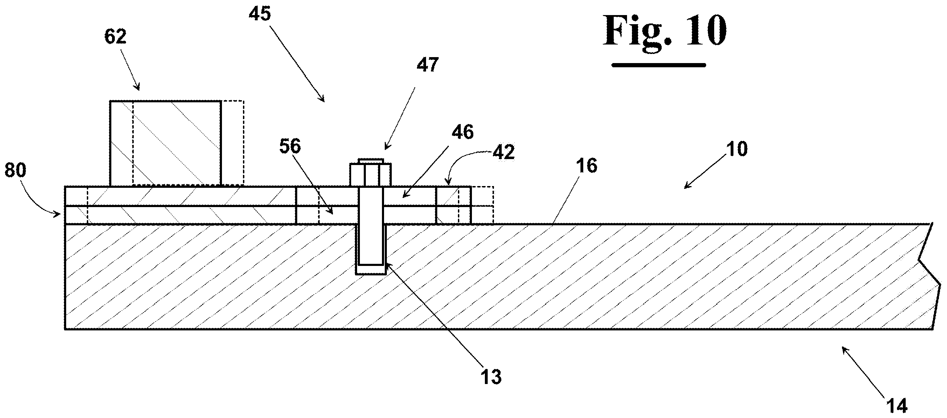

As shown in detail in the partially sectioned view of Fig. 10, between each movable part 42 of the sliding unit 40 and the platform 14 a friction reduction element 80 is provided. This has the function to reduce the friction during the sliding of the movable part 42 with respect to the surface 16 of the platform 14 of the vehicle lift 10. For example, the friction reduction element 80 can be a plate, in particular made of synthetic material, such as plastic material for example Teflon, or made of a metal material, for example of stainless steel. The plate is located between the movable part 42 and the upper face 16 of the vehicle lift 10. More in detail, the plate 80 and the movable part 42 of the sliding unit 40 has respective slotted, or elongated, holes 46, 56 that, in use, are overlapped to each other. More in detail, the holes 46, 56 have a respective longitudinal axis that, in use, is oriented along the sliding direction 110 of the measuring devices 61 and 62. At the above described slotted, or elongated, holes 46 and 56 the movable part 42 of the sliding unit 40 and the friction reduction plate 80 are constrained to the platform 14 by means of at least one reference element, for example a bolt 47 that engages, in particular by means of screw threaded coupling in a housing 13 provided in a surface, in particular the upper surface 16, of the platform 14. This way, the sliding of the movable part of the sliding unit is guided in a precise way and it is avoided that the measuring devices 61, 62, can move from the respective correct positions.

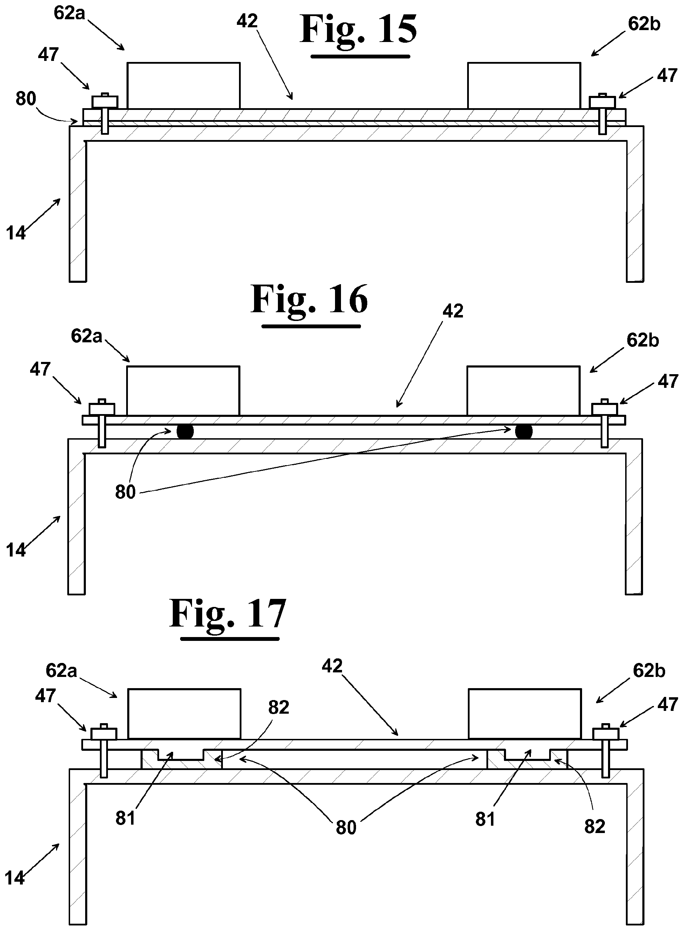

In the exemplary embodiment diagrammatically shown in Fig. 16, the friction reduction element 80 located between the platform 14 and the movable part 42 is a little sphere, or a roller.

Instead, in the further exemplary embodiment of Fig. 17, the friction reduction element 80 consists of a sliding portion 81 protruding from the movable part 42 and arranged to slide in a guiding portion 82 located between the platform 14 and the movable part 42.

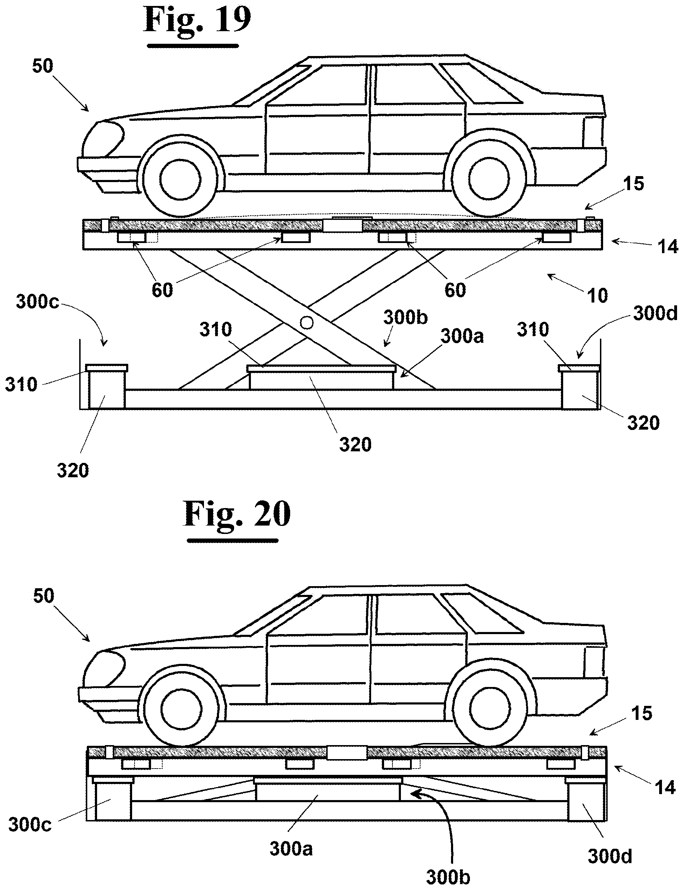

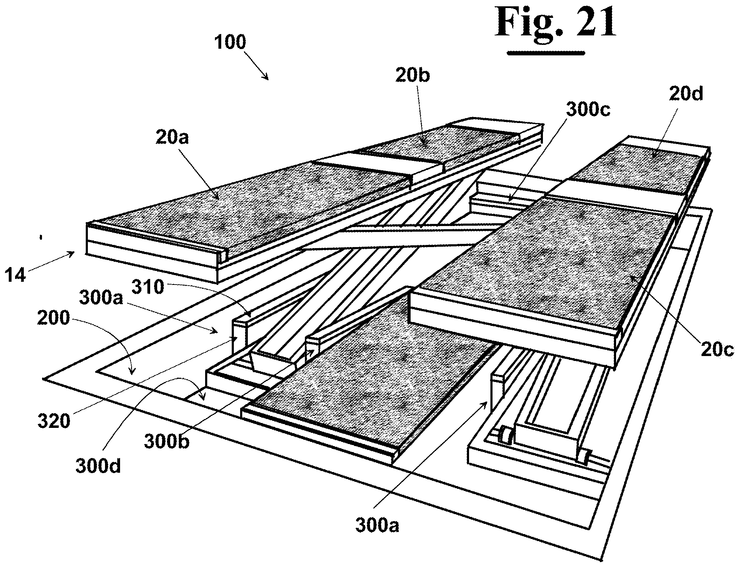

With reference to Figs. 19 to 21, according to another aspect of the invention a plurality of support elements 300 can also be provided, for example four support elements 300a-300d, each of which arranged below the platform 14 at a side of it. Preferably, the support elements 300 are arranged at a measuring device 60, or very close to it.

It is also provided an exemplary embodiment, not shown in the figures, in which the support elements 300 are only two arranged below the platform 14 at two opposite sides of it. More in detail, each support element 300 has a respective support surface 310 on which a corresponding part of the vehicle lift 10 rests when it is arranged in the lowered configuration. Each support element 300 consists of a support frame 320 equipped with a layer of a low friction material, in particular Teflon, at the support surface 310.

In an exemplary embodiment, the frame 320 is of adjustable type, in particular in height, in such a way that it can be adapted to the different needs.

The foregoing description of specific exemplary embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. it is to be understood that the phraseology or terminology that is employed herein is for the purpose of description and not of limitation.

## Claims

1. System (100) for measuring the braking force of a vehicle (50) comprising:
- a vehicle lift (10) provided with a platform (14) having a support plane (15) on which, in use, said vehicle is arranged, said vehicle lift (10) arranged to move from a lowered configuration, in which said support plane (15) is arranged substantially at a same height of the floor of the room in which it is installed and operates in a brake test bench mode for measuring the braking force of said vehicle (50), and a raised configuration in which said support plane (15) is arranged at a predetermined height from the floor of the room in which it is installed, in particular to carry out maintenance on the vehicle (50) ;
- a measuring unit (60) associated with said platform (14), said measuring unit (60) configured to measure the vertical forces and/or the horizontal forces acting on said support plane (15) when said vehicle lift (10) operates in said brake test bench mode, said measuring unit (60) comprising:
- at least a first measuring device (61) arranged on a first side (11) of said platform (14);
- at least a second measuring device (62) arranged on a second side (12) of said platform (14), said second side (12) located opposite to said first side (11);
said system (100) being **characterized in that** a slide unit (40) is furthermore provided configured to cause a mutual sliding of said first and of said second measuring device (61,62) along a first sliding direction (110) when said vehicle lift (10) moves from said lowered configuration to said raised configuration and a sliding in a second direction (110') opposite to the first direction, when said vehicle lift (10) moves from said raised configuration to said lowered configuration, in such a way that said first and said second measuring devices (61,62) are arranged to relatively move towards/away each other avoiding to be subjected to stresses.

2. System (100) for measuring the braking force of a vehicle (50), according to claim 1, wherein said sliding in said first sliding direction (110) is arranged to move said first and said second measuring device (61,62) away from each other, whereas said sliding in said second sliding direction (110') is arranged to approach said first and said second measuring device (61,62).

3. System (100) for measuring the braking force of a vehicle (50), according to claim 1, wherein said sliding unit (40) is associated to guide means (45) arranged to guide said mutual sliding of said first and of said second measuring device (61,62).

4. System (100) for measuring the braking force of a vehicle (50), according to any one of the previous claims, wherein said sliding unit (40) comprises:
- a fixed part (41) integral to said platform (14), on said fixed part (41) said first measuring device (61) being mounted; and
- a movable part (42) arranged to slide with respect to said platform (14), on said movable part (42) said second measuring device (62) being mounted.

5. System (100) for measuring the braking force of a vehicle (50), according to claim 4, wherein said movable part (42) of said sliding unit (40) is plate-shaped and said guide means (45) comprises:
- at least one slotted hole (46) provided in said movable part (42) and oriented along said sliding direction;
- at least one reference element (47) arranged to engage with said slotted hole (46) and fastened, in use, in a seat provided in said platform (14), in such a way that said movable part (42) is arranged to slide with respect to said platform (14) in a guided and referred way.

6. System (100) for measuring the braking force of a vehicle (50), according to any one of the previous claims, wherein at least one among said first and said second measuring device (61,62) comprises at least one first and at least one second measuring element (61a,61b, 62a,62b) configured to measure the vertical force and/or the horizontal force acting on said support plane (15) during the use in said brake test bench mode.

7. System (100) for measuring the braking force of a vehicle (50), according to claim 6, wherein each measuring element (61a,61b, 62a,62b) is a biaxial force sensor configured to measure both the horizontal forces F and the vertical forces P acting on said support plane (15) during said test for measuring the braking force of said vehicle (50).

8. System (100) for measuring the braking force of a vehicle (50), according to any one of the previous claims, wherein said platform (14) consists of a plurality of measuring plates (20a-20f), said plurality comprising at least a first and a second plate (20a,20b) parallel to each other that, in use, are arranged respectively at a first side (10a) and at a second side (10b) of said platform (14), said first measuring plate (20a) being crossed, in use, by the wheels of a first side (50a) of said vehicle (50), and said second measuring plate (20b) being crossed, in use, by the wheels of a second side (50b) of said vehicle (50).

9. System (100) for measuring the braking force of a vehicle (50), according to claim 4, wherein between said movable part (42) of said sliding unit and said support plane (15) a friction reduction element (80) is provided arranged to reduce the friction during the sliding of said movable part (42) with respect to said platform (14).

10. System (100) for measuring the braking force of a vehicle (50), according to claim 9, wherein said friction reduction element (80) is a plate positioned between said, or each, movable part (42) of said sliding unit (40) and said platform (14), said plate and said movable part (42) having respective slotted holes (46,56) that, in use, are overlapped, said plate and said movable part (42) being constrained to said platform (14) at said slotted holes (46,56) by means of at least one reference element, in particular said, or each, reference element being a bolt (47) arranged to engage with a housing (13) provided in said platform (14).

11. System (100) for measuring the braking force of a vehicle (50), according to claim 9, wherein said friction reduction element (80) comprises at least one sphere, or a roller, which are located between said platform (14) and said movable part (42) of said slide unit (40).

12. System (100) for measuring the braking force of a vehicle (50), according to claim 9, wherein said friction reduction element (80) is a sliding portion (81) integral to said platform (14), or to said movable part (42), and a guiding portion (82) integral, respectively, to said movable part (42), or to said platform (14).

13. System (100) for measuring the braking force of a vehicle (50), according to any one of the previous claims, wherein a plurality of support elements (300) is also provided, each support element (300) of said plurality having a respective support surface (310) on which said platform (14) rests when said vehicle lift (10) is in said lowered configuration.

14. System (100) for measuring the braking force of a vehicle (50), according to claim 13, wherein each support element (300) consists of a support frame (320) equipped with a layer of a low friction material, in particular Teflon, at said support surface (310).

15. System (100) for measuring the braking force of a vehicle (50), according to claim 14, wherein said frame (320) is of adjustable type, in particular in height, in such a way that it can be adapted to the different operating conditions.

## Patentansprüche

1. System (100) zum Messen der Bremskraft eines Fahrzeugs (50), das Folgendes umfasst:
- eine Fahrzeughebebühne (10), die mit einer Plattform (14) bereitgestellt ist, die eine Trägerebene (15) aufweist, auf der, bei Verwendung, das Fahrzeug angeordnet ist, wobei die Fahrzeughebebühne (10) angeordnet ist, um sich aus einer abgesenkten Konfiguration, in der die Trägerebene (15) im Wesentlichen auf einer gleichen Höhe des Bodens des Raums angeordnet ist, in dem sie aufgestellt ist, und in einem Bremsenprüfstandsmodus zum Messen der Bremskraft des Fahrzeugs (50) betrieben wird, zu einer erhöhten Konfiguration zu bewegen, in der die Trägerebene (15) an einer vorbestimmten Höhe vom Boden des Raums angeordnet ist, in dem sie aufgestellt ist, insbesondere, um Wartung am Fahrzeug (50) durchzuführen;
- eine der Plattform (14) zugeordnete Messeinheit (60), wobei die Messeinheit (60) dazu konfiguriert ist, die vertikalen Kräfte und/oder die horizontalen Kräfte, die auf die Trägerebene (15) wirken, zu messen, wenn die Fahrzeughebebühne (10) im Bremsenprüfstandsmodus betrieben wird, wobei die Messeinheit (60) Folgendes umfasst:
- mindestens eine erste Messvorrichtung (61), die auf einer ersten Seite (11) der Plattform (14) angeordnet ist;
- mindestens eine zweite Messvorrichtung (62), die auf einer zweiten Seite (12) der Plattform (14) angeordnet ist, wobei sich die zweite Seite (12) gegenüber der ersten Seite (11) befindet;
wobei das System (100) **dadurch gekennzeichnet ist, dass** ferner eine Gleiteinheit (40) bereitgestellt ist, die dazu konfiguriert ist, ein gegenseitiges Gleiten der ersten und der zweiten Messvorrichtung (61, 62) entlang einer ersten Gleitrichtung (110), wenn sich die Fahrzeughebebühne (10) aus der abgesenkten Konfiguration zur erhöhten Konfiguration bewegt, und ein Gleiten in eine zweite Richtung (110') entgegengesetzt zur ersten Richtung zu bewirken, wenn sich die Fahrzeughebebühne (10) aus der erhöhten Konfiguration zur abgesenkten Konfiguration bewegt, sodass die erste und die zweite Messvorrichtung (61, 62) angeordnet sind, um sich relativ aufeinander zu/voneinander weg zu bewegen, um zu vermeiden, Spannungen ausgesetzt zu sein.

2. System (100) zum Messen der Bremskraft eines Fahrzeugs (50) nach Anspruch 1, wobei das Gleiten in der ersten Gleitrichtung (110) angeordnet ist, um die erste und die zweite Messvorrichtung (61, 62) voneinander wegzubewegen, während das Gleiten in der zweiten Gleitrichtung (110') angeordnet ist, um die erste und die zweite Messvorrichtung (61, 62) anzunähern.

3. System (100) zum Messen der Bremskraft eines Fahrzeugs (50) nach Anspruch 1, wobei der Gleiteinheit (40) Führungsmittel (45) zugeordnet sind, die angeordnet sind, um das gegenseitige Gleiten der ersten und der zweiten Messvorrichtung (61, 62) zu führen.

4. System (100) zum Messen der Bremskraft eines Fahrzeugs (50) nach einem der vorhergehenden Ansprüche, wobei die Gleiteinheit (40) Folgendes umfasst:
- einen fixierten Teil (41), der mit der Plattform (14) einstückig ausgebildet ist, wobei die erste Messvorrichtung (61) auf dem fixierten Teil (41) montiert ist; und
- einen bewegbaren Teil (42), der angeordnet ist, um in Bezug auf die Plattform (14) zu gleiten, wobei die zweite Messvorrichtung (62) auf dem bewegbaren Teil (42) montiert ist.

5. System (100) zum Messen der Bremskraft eines Fahrzeugs (50) nach Anspruch 4, wobei der bewegbare Teil (42) der Gleiteinheit (40) plattenförmig ist und die Führungsmittel (45) Folgendes umfassen:
- mindestens ein Langloch (46), das in dem bewegbaren Teil (42) bereitgestellt und entlang der Gleitrichtung ausgerichtet ist;
- mindestens ein Referenzelement (47), das angeordnet ist, um mit dem Langloch (46) in Eingriff zu treten und, bei Verwendung, in einem in der Plattform (14) bereitgestellten Sitz befestigt zu sein, sodass der bewegbare Teil (42) angeordnet ist, um in Bezug auf die Plattform (14) in einer geführten und vorgegebenen Weise zu gleiten.

6. System (100) zum Messen der Bremskraft eines Fahrzeugs (50) nach einem der vorhergehenden Ansprüche, wobei mindestens eine unter der ersten und der zweiten Messvorrichtung (61, 62) mindestens ein erstes und mindestens ein zweites Messelement (61a, 61b, 62a, 62b) umfasst, die dazu konfiguriert sind, die vertikale Kraft und/oder die horizontale Kraft zu messen, die auf die Trägerebene (15) während der Verwendung im Bremsenprüfstandsmodus wirkt.

7. System (100) zum Messen der Bremskraft eines Fahrzeugs (50) nach Anspruch 6, wobei jedes Messelement (61a, 61b, 62a, 62b) ein biaxialer Kraftsensor ist, der dazu konfiguriert ist, sowohl die horizontalen Kräfte F als auch die vertikalen Kräfte P zu messen, die auf die Trägerebene (15) während des Tests zum Messen der Bremskraft des Fahrzeugs (50) wirken.

8. System (100) zum Messen der Bremskraft eines Fahrzeugs (50) nach einem der vorhergehenden Ansprüche, wobei die Plattform (14) aus einer Vielzahl von Messplatten (20a-20f) besteht, wobei die Vielzahl mindestens eine erste und eine zweite Platte (20a, 20b), die parallel zueinander sind, umfasst, die, bei Verwendung, entsprechend an einer ersten Seite (10a) und an einer zweiten Seite (10b) der Plattform (14) angeordnet sind, wobei die erste Messplatte (20a), bei Verwendung, von den Rädern einer ersten Seite (50a) des Fahrzeugs (50) überquert wird, und wobei die zweite Messplatte (20b), bei Verwendung, von den Rädern einer zweiten Seite (50b) des Fahrzeugs (50) überquert wird.

9. System (100) zum Messen der Bremskraft eines Fahrzeugs (50) nach Anspruch 4, wobei zwischen dem bewegbaren Teil (42) der Gleiteinheit und der Trägerebene (15) ein reibungsreduzierendes Element (80) bereitgestellt ist, um die Reibung während des Gleitens des bewegbaren Teils (42) in Bezug auf die Plattform (14) zu reduzieren.

10. System (100) zum Messen der Bremskraft eines Fahrzeugs (50) nach Anspruch 9, wobei das reibungsreduzierende Element (80) eine Platte ist, die zwischen dem oder jedem bewegbaren Teil (42) der Gleiteinheit (40) und der Plattform (14) positioniert ist, wobei die Platte und der bewegbare Teil (42) entsprechende Langlöcher (46, 56) aufweisen, die sich, bei Verwendung, überlappen, wobei die Platte und der bewegbare Teil (42) an den Langlöchern (46, 56) auf die Plattform (14) durch mindestens ein Referenzelement begrenzt sind, wobei das oder jedes Referenzelement insbesondere ein Bolzen (47) ist, der angeordnet ist, um mit einem in der Plattform (14) bereitgestellten Gehäuse (13) im Eingriff zu stehen.

11. System (100) zum Messen der Bremskraft eines Fahrzeugs (50) nach Anspruch 9, wobei das reibungsreduzierende Element (80) mindestens eine Kugel oder eine Walze umfasst, die sich zwischen der Plattform (14) und dem bewegbaren Teil (42) der Gleiteinheit (40) befindet.

12. System (100) zum Messen der Bremskraft eines Fahrzeugs (50) nach Anspruch 9, wobei das reibungsreduzierende Element (80) ein Gleitabschnitt (81) ist, der mit der Plattform (14) oder dem bewegbaren Teil (42) einstückig ausgebildet ist, und ein Führungsabschnitt (82) entsprechend mit dem bewegbaren Teil (42) oder der Plattform (14) einstückig ausgebildet ist.

13. System (100) zum Messen der Bremskraft eines Fahrzeugs (50) nach einem der vorhergehenden Ansprüche, wobei auch eine Vielzahl von Trägerelementen (300) bereitgestellt ist, wobei jedes Trägerelement (300) der Vielzahl eine entsprechende Trägerfläche (310) aufweist, auf der die Plattform (14) ruht, wenn die Fahrzeughebebühne (10) in der abgesenkten Konfiguration ist.

14. System (100) zum Messen der Bremskraft eines Fahrzeugs (50) nach Anspruch 13, wobei jedes Trägerelement (300) aus einem Trägerrahmen (320) besteht, der mit einer Schicht eines reibungsarmen Materials, insbesondere Teflon, an der Trägerfläche (310) ausgestattet ist.

15. System (100) zum Messen der Bremskraft eines Fahrzeugs (50) nach Anspruch 14, wobei der Rahmen (320) von einem verstellbaren Typ ist, insbesondere in der Höhe, so dass er an die verschiedenen Betriebsbedingungen angepasst werden kann.

## Revendications

1. Système (100) destiné à mesurer la force de freinage d'un véhicule (50) comprenant :
- un élévateur de véhicule (10) équipé d'une plate-forme (14) comportant un plan de support (15) sur lequel, lors de l'utilisation, ledit véhicule est agencé, ledit élévateur de véhicule (10) agencé pour se déplacer à partir d'une configuration abaissée, dans laquelle ledit plan de support (15) est agencé sensiblement à une même hauteur que celle du plancher de la salle dans laquelle il est installé et fonctionne dans un mode de banc d'essai de freinage permettant de mesurer la force de freinage dudit véhicule (50) et d'une configuration surélevée dans laquelle ledit plan de support (15) est agencé à une hauteur préétablie depuis le plancher de la salle dans laquelle il est installé, en particulier pour effectuer l'entretien du véhicule (50) ;
- une unité de mesure (60) associée à ladite plateforme (14), ladite unité de mesure (60) étant configurée pour mesurer les forces verticales et/ou les forces horizontales agissant sur ledit plan de support (15) lorsque ledit élévateur de véhicule (10) fonctionne dans ledit mode de banc d'essai de freinage, ladite unité de mesure (60) comprenant :
- au moins un premier dispositif de mesure (61) agencé sur un premier côté (11) de ladite plate-forme (14) ;
- au moins un second dispositif de mesure (62) agencé sur un second côté (12) de ladite plate-forme (14), ledit second côté (12) étant située à l'opposé dudit premier côté (11) ;
ledit système (100) étant **caractérisé en ce qu'**une unité coulissante (40) est fournie par ailleurs, conçue pour provoquer un coulissage mutuel dudit premier et dudit second dispositif de mesure (61, 62) le long d'une première direction de coulissage (110) lorsque ledit élévateur de véhicule (10) se déplace de ladite configuration abaissée à ladite configuration surélevée et un coulissage selon une seconde direction (110') opposée à la première direction, lorsque ledit élévateur de véhicule (10) se déplace de ladite configuration surélevée à ladite configuration abaissée, d'une façon telle que lesdits premier et second dispositifs de mesure (61, 62) sont agencés pour se rapprocher/s'éloigner relativement l'un de l'autre, évitant d'être soumis à des contraintes.

2. Système (100) destiné à mesurer la force de freinage d'un véhicule (50) selon la revendication 1, ledit coulissage selon ladite première direction de coulissage (110) étant agencé pour éloigner lesdits premier et second dispositifs de mesure (61, 62) l'un de l'autre, alors que ledit coulissage selon ladite seconde direction de coulissage (110') étant agencé pour rapprocher ledit premier et ledit second dispositif de mesure (61, 62).

3. Système (100) destiné à mesurer la force de freinage d'un véhicule (50), selon la revendication 1, ladite unité coulissante (40) étant associée à un moyen de guidage (45) agencé pour guider ledit coulissage mutuel dudit premier et dudit second dispositif de mesure (61, 62).

4. Système (100) destiné à mesurer la force de freinage d'un véhicule (50) selon l'une quelconque des revendications précédentes, ladite unité coulissante (40) comprenant :
- une partie fixe (41) faisant partie intégrante de ladite plate-forme (14), ledit premier dispositif de mesure (61) étant monté sur ladite partie fixe (41) ; et
- une partie mobile (42) agencée pour coulisser par rapport à ladite plate-forme (14), ledit second dispositif de mesure (62) étant monté sur ladite partie mobile (42).

5. Système (100) destiné à mesurer la force de freinage d'un véhicule (50) selon la revendication 4, ladite partie mobile (42) de ladite unité coulissante (40) étant en forme de plaque, et ledit moyen de guidage (45) comprenant :
- au moins un trou en forme de fente (46) disposé dans ladite partie mobile (42) et orienté le long de ladite direction coulissante ;
- au moins un élément de référence (47) agencé pour venir en prise avec ledit trou en forme de fente (46) et fixé, lors de l'utilisation, dans un siège disposé dans ladite plate-forme (14), d'une façon telle que ladite partie mobile (42) est agencée pour coulisser par rapport à ladite plate-forme (14) de façon guidée et visée.

6. Système (100) destiné à mesurer la force de freinage d'un véhicule (50) selon l'une quelconque des revendications précédentes, au moins un parmi ledit premier et ledit second dispositif de mesure (61, 62) comprenant au moins un premier et au moins un second élément de mesure (61a, 61b, 62a, 62b) conçu pour mesurer la force verticale et/ou la force horizontale agissant sur ledit plan de support (15) durant l'utilisation dans ledit mode de banc d'essai de freinage.

7. Système (100) destiné à mesurer la force de freinage d'un
véhicule (50) selon la revendication 6, chaque élément de mesure (61a, 61b, 62a, 62b) étant un capteur de force biaxial conçu pour mesurer les forces horizontales F et les forces verticales P agissant sur ledit plan de support (15) durant ledit essai pour mesurer la force de freinage dudit véhicule (50).

8. Système (100) destiné à mesurer la force de freinage d'un véhicule (50) selon l'une quelconque des revendications précédentes, ladite plate-forme (14) comprenant une pluralité de plaques de mesure (20a à 20f), ladite pluralité comprenant au moins une première et une seconde plaque (20a, 20b) parallèles l'une à l'autre qui, lors de l'utilisation, sont agencées respectivement au niveau d'un premier côté (10a) et au niveau d'un second côté (10b) de ladite plate-forme (14), ladite première plaque de mesure (20a) étant traversée, lors de l'utilisation, par les roues d'un premier côté (50a) dudit véhicule (50) et ladite seconde plaque de mesure (20b) étant traversée, lors de l'utilisation, par les roues d'un second côté (50b) dudit véhicule (50).

9. Système (100) destiné à mesurer la force de freinage d'un véhicule (50) selon la revendication 4, entre ladite partie mobile (42) de ladite unité coulissante et ledit plan de support (15) un élément de réduction de frottement (80) étant fourni, agencé pour réduire le frottement durant le coulissage de ladite partie mobile (42) par rapport à ladite plate-forme (14).

10. Système (100) destiné à mesurer la force de freinage d'un véhicule (50) selon la revendication 9, ledit élément de réduction de frottement (80) étant une plaque positionnée entre ladite, ou chaque, partie mobile (42) de ladite unité coulissante (40) et ladite plate-forme (14), ladite plaque et ladite partie mobile (42) possédant des trous en forme de fente (46, 56) respectifs qui, lors de l'utilisation, se chevauchent, ladite plaque et ladite partie mobile (42) étant contraintes vers ladite plate-forme (14) au niveau des trous en forme de fente (46, 56) au moyen d'au moins un élément de référence, en particulier ledit, ou chaque, élément de référence étant un boulon (47) agencé pour se mettre en prise avec un logement (13) disposé dans ladite plate-forme (14).

11. Système (100) destiné à mesurer la force de freinage d'un véhicule (50) selon la revendication 9, ledit élément de réduction de frottement (80) comprenant au moins une sphère, ou un rouleau, qui sont situés entre ladite plate-forme (14) et la partie mobile (42) de ladite unité coulissante (40).

12. Système (100) destiné à mesurer la force de freinage d'un véhicule (50) selon la revendication 9, ledit élément de réduction de frottement (80) étant une partie coulissante (81) faisant partie intégrante de ladite plate-forme (14), ou de ladite partie mobile (42) et une partie de guidage (82) faisant partie intégrante, respectivement, de ladite partie mobile (42) ou de ladite plate-forme (14).

13. Système (100) destiné à mesurer la force de freinage d'un véhicule (50) selon l'une quelconque des revendications précédentes, une pluralité d'éléments de support (300) étant également fournie, chaque élément de support (300) de ladite pluralité possédant une surface de support respective (310) sur laquelle ladite plate-forme (14) repose lorsque ledit élévateur de véhicule (10) se trouve dans ladite configuration abaissée.

14. Système (100) destiné à mesurer la force de freinage d'un véhicule (50) selon la revendication 13, chaque élément de support (300) comprenant un cadre de support (320) pourvu d'une couche d'un matériau à faible adhérence, en particulier du Téflon, au niveau de ladite surface de support (310).

15. Système (100) destiné à mesurer la force de freinage d'un véhicule (50) selon la revendication 14, ledit cadre (320) étant de type réglable, en particulier en hauteur, d'une façon telle qu'il peut s'adapter aux différentes conditions de fonctionnement.
